# EUROPÄISCHE PATENTSCHRIFT

(11) **EP 2 468 546 B1**
(45) Veröffentlichungstag und Bekanntmachung des Hinweises auf die Patenterteilung: **01.08.2018**
(21) Anmeldenummer: 11009873.8
(22) Anmeldetag: 15.12.2011
(51) Int. Cl.: B60J 7/06

(54) **Faltverdeck eines Fahrzeugs**
Foldable vehicle roof
Toit décapotable de véhicule

(30) Priorität: 24.12.2010 DE 102010056244
(43) Veröffentlichungstag der Anmeldung: 27.06.2012
(73) Patentinhaber: Magna Car Top Systems GmbH, 74321 Bietigheim-Bissingen (DE)
(72) Erfinder: Katrini, Waleri, 74321 Bietigheim-Bissingen (DE); Papendorf, Marcus, 74357 Bönnigheim (DE); Klein, Berthold, 74343 Sachsenheim (DE); Liebhardt, Randolf, 71120 Grafenau (DE)
(74) Vertreter: Völger, Silke Beatrix

(56) Entgegenhaltungen:
- EP-A1- 0 603 834
- EP-A1- 2 172 355
- DE-C1- 4 041 763
- JP-A- H0 490 925
- US-A- 1 849 099

## Beschreibung

Die vorliegende Erfindung betrifft ein Faltverdeck eines Fahrzeugs mit den Merkmalen des Oberbegriffs des Anspruchs 1.

Bei Faltverdecken von Fahrzeugen ist es allgemein gebräuchlich, dass der die Dachöffnung überspannende Verdeckstoff mittels quer zur Fahrzeuglängsachse sich erstreckenden Querspriegeln in der geschlossenen Faltverdeckposition unterstützt und gespannt wird. Hierzu werden die Querspriegel häufig in Falt- und Zwischenspriegeln unterteilt, wobei nur die Faltspriegel bei sich öffnendem Faltverdeck vom Dach abgehoben werden. Beide Spriegelarten werden jedoch über Führungselemente in seitlich der Dachöffnung angeordneten Führungsschienen aufgenommen und verschiebbar geführt. Ein derartiges Faltverdeck ist aus den Druckschriften EP 0 603 834 A1 und EP 2 172 355 A1 bekannt.

Je nach dem, wie lang die vom Faltverdeck zu überspannende Dachöffnung ist, können mehrere Falt- und Zwischenspriegel hintereinander angeordnet sein. In geöffnetem Zustand reihen sich diese Spriegel dicht voneinander beabstandet im hinteren Bereich des Faltverdecks auf, wobei entsprechend dem Verlauf der Dachöffnung dies auch unterhalb des horizontalen Dachbereichs, nämlich im Bereich unterhalb der Heckscheibe erfolgen kann. In diesem Fall ist die Heckscheibe ebenfalls zusammen mit dem Verdeckstoff in gefalteter Lage abgelegt.
Diese Ablageposition nimmt verhältnismäßig viel Raum ein, da sowohl der Verdeckstoff, wie auch die Kinematik der Spriegel entsprechend positioniert werden müssen. Um hierbei zu einer dichteren Ablageposition des Faltverdecks zu gelangen, sind die Kinematiken, insbesondere die Lenker und Führungsstreben der Spriegel häufig mehrteilig über Gelenke schwenkbar miteinander verbunden. Auf diese Art lassen sich die Spriegel weiter nach hinten schwenken, so dass eine kompaktere Ablage des Faltverdecks möglich wird. Dabei sind die Kinematiken so zu wählen, dass diese in Ablagestellung überwiegend parallel zueinander angeordnet sind. Um dies zu gewährleisten werden die Lenker und Führungsstreben beispielsweise durch Steuerlenker oder Seilzüge gezielt in die vorbestimmte Bewegungsposition angesteuert, so dass diese in die gewünschten Positionen eingeschwenkt werden können. Derartige Systeme sind durch die Vielzahl von Lenkern, Führungsstreben und Steuereinrichtungen zur Bewegung der Falt- oder Zwischenspriegel sehr kompliziert und teuer.

Weiterhin ist aus der DE 40 41 763 C1 ein Faltdach für eine Abdeckung in einer festen Dachhaut eines Fahrzeuges bekannt. Dort ist eine flexible Abdeckung vorgesehen, die über die Dachöffnung gezogen wird, um das Dach zu schließen, und die beim Freigeben der Dachöffnung in einer Reihe von Falten nach hinten gefaltet wird. Der zur Erreichung des Faltverhaltens verwendete Abstützmechanismus weist Führungsschienen auf beiden Seiten der Dachöffnung und eine Reihe von Abstützelementen auf, die durch in den Führungsschienen laufende Gleitelemente verbunden sind. Jedes Abstützelement ist mit dem vorderen und mit dem hinteren Ende eines Gleitelementes verbunden.

Ein weiteres Faltverdeck ist aus der JP 2892118 B2 bekannt. Hierbei ist ebenfalls eine flexible Abdeckung an Rahmenelementen fixiert, wobei die Rahmenelemente in seitlichen Führungsschienen im Bereich der Dachöffnung geführt werden.

Die DE 43 06 451 C1 beschreibt ein Faltdach eines Fahrzeugs zum wahlweise Verschließen oder wenigstens teilweise Freigeben einer vorgesehenen Dachöffnung. Hierbei wird ein flexibler Verdeckstoff mittels quer zur Fahrzeuglängsachse angeordneten Querspriegeln über die Dachöffnung gespannt, wobei der Verdeckstoff an einem Vorderen und einem Hinteren fest angebunden ist. Zwischen dem vorderen und dem hinteren Querspriegel sind Faltspriegel und Zwischenspriegel angeordnet. Die Faltspriegel sind jeweils über zwei mit einem vorderen und einem hinteren, sich im seitlichen Öffnungsbereich der Dachöffnung befindenden, Lenkern schwenkbar verbunden und werden bei sich öffnenden Dach zusammen mit dem Verdeckstoff nach oben geschwenkt. Diese Lenker sind in Form einer Gliederbandkette ausgeführt und in den seitlichen Dachbereichen parallel zueinander angeordnet. Die Zwischenspriegel sind über entsprechende verschiebbare Gleitelemente an ihren Enden aufgenommen, wobei die Gleitelemente in seitlichen, die Dachöffnung begrenzenden Führungsschienen verschiebbar gelagert sind. Der Verdeckstoff bleibt im Bereich der Zwischenspriegel im Wesentlichen nahe der Dachöffnung, wobei diese zum Beispiel trapezförmig ausgebildet ist und mit ihrer breiten Seite die Vorderkante der Dachöffnung bildet. Bei sich öffnendem Verdeck gleiten die Gleitelemente der Zwischenspriegel in nicht parallel zueinander ausgerichteten seitlichen Führungsschienen. Hierbei schieben sich die Zwischenspriegel in einen Aufnahmeraum der seitlichen Gleitelemente hinein, wodurch eine Kompensation der nach hinten zusammenlaufenden Dachöffnung erfolgen kann. Dieser Vorgang wiederholt sich entgegengesetzt bei sich schließenden Faltverdeck.
Aus der DE 916 497 ist ein bewegbares Faltverdeck (Schiebedach) für ein Fahrzeug bekannt, bei dem quer zur Fahrzeuglängsrichtung Zwischen- und Faltspriegel über eine Dachöffnung positioniert sind. Die Ansteuerung der Spriegel ist so gestaltet, dass sich bei öffnendem Faltverdeck eine erste Falte des Verdeckstoffs im hinteren Bereich des Faltverdecks bildet. Die Faltspriegel sind die Spriegel, die sich bei öffnendem Verdeck vom Dachbereich abheben, wobei diese über Führungen in Führungsschienen aufgenommen sind und bei sich öffnendem oder schließendem Faltverdeck innerhalb der Führungsschienen verschoben werden können. Nahe dem hinteren Faltspriegel weist die Führungsschiene eine Erweiterung auf, aus der die Faltspriegel und Zwischenspriegel herausspringen können und über ein gelenkiges Bandsystem miteinander verbunden, im hinteren Bereich des Faltverdecks abgelegt werden können. Hierbei können die Führungen der Zwischenspriegel und die Führungen der Faltspriegel in unterschiedlichen Leisten der Führungsschiene aufgenommen und geführt werden. Die beim Öffnungsvorgang entstehende Faltenbildung wird durch das Bandsystem in Richtung des Faltenwurfes unterstützt, wobei das Bandsystem aus nach oben gebogenen (in Faltenrichtung) Bandelementen besteht.

Die vorliegende Erfindung beschäftigt sich mit dem Problem, für ein Faltverdeck eines Fahrzeugs bzw. für ein damit ausgestattetes Fahrzeug eine verbesserte Ausführungsform anzugeben, die sich insbesondere dadurch auszeichnet, dass die Spriegel gezielt über einen besonders großen Schwenkbereich bewegt werden können.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine bauraumsparende Verdeckkinematik zu schaffen, bei der Faltspriegel und Zwischenspriegel in einer besonders kompakten Position im Heckbereich des Fahrzeuges abgelegt werden können. Hierzu sind Faltspriegel und Zwischenspriegel quer zur Fahrzeuglängsrichtung unterhalb des Verdeckstoffs und der Dachöffnung positioniert ausgerichtet, wobei die Faltspriegel und die Zwischenspriegel abwechselnd zueinander angeordnet sind. Über seitliche Führungsschienen einer Dachführung können, sowohl die Faltspriegel, wie auch die Zwischenspriegel mittels Schlitten beziehungsweise Führungskörpern entlang der Führungsschiene nach hinten in Richtung Heck des Fahrzeuges verschoben werden. Hierbei werden die Faltspriegel über einen Führungsmechanismus, bestehend aus einem Gleitkörper, der am Lenker eines jeden Faltspriegels angebracht ist, über die Führungsschiene so geführt, dass in einer hinteren Position der Dachführung die Gleitkörper an einer Ausnehmung der Führungsschiene hervortreten können und somit die Lenker der Faltspriegel über einen weiten Bereich schwenkbar sind. Im Unterschied zu den Faltspriegeln sind die Zwischenspriegel nicht schwenkbar.

Bei geschlossenem Faltverdeck ist der Verdeckstoff über eine im vorderen Bereich des Faltverdecks angeordneten Dachkappe, einem im C-Säulen-Bereich angeordneten Eckspriegel, sowie einem Spannspriegel im Heckbereich des Fahrzeuges gespannt. Der Spannspriegel ist fest mit der Karosserie verbunden, wobei der Eckspriegel in der Führungsschiene der Dachführung geführt und positioniert wird. Über die Dachkappe und ihrer Endlagenposition bei geschlossenem Faltverdeck wird der Verdeckstoff über die Falt- und Zwischenspriegel gespannt. Selbstverständlich ist es möglich, dass sowohl die Zwischenspriegel, wie auch die Faltspriegel in ihrer Position bei geschlossenem Faltverdeck über separate Mechanismen fixiert und verriegelt werden können.

Eine besonders vorteilhafte Ausführung sieht vor, dass ein Führungskörper, sowohl einen Zwischenspriegel, wie auch einen Faltspriegel schwenkbar lagert, wobei der Faltspriegel über einen Lenker mit dem Führungskörper verbunden ist. Damit der schwenkbare Faltspriegel in seiner Position gehalten werden kann, weist dieser entweder einen Verriegelungsmechanismus auf oder ist über einen Gleitkörper in der Führungsschiene der Dachführung so gehalten, dass der Lenker des Faltspriegels keine vertikalen Bewegungen erfahren kann. Der Lenker des Faltspriegels wird somit in der Führungsschiene zwangsgeführt.

Beim Öffnen des Faltverdecks ist es möglich, dass die erste Faltenbildung über einen Faltenspriegel nahe beabstandet der Dachkappe erfolgt. Ebenso ist es denkbar, dass die erste Faltenbildung im hinteren Bereich des Faltverdecks nahe dem Eckspriegel beziehungsweise dem Übergang der horizontalen Ausrichtung der Führungsschiene in die vertikale Ausführung der Führungsschiene erfolgt. In diesem hinteren Bereich weist die Führungsschiene vorteilhaft eine Ausnehmung auf, aus der der Gleitkörper eines jeden Faltspriegels bei Erreichen dieser Position, aus der Führungsschiene heraustreten kann, wobei der Faltspriegel mit seinem Lenker frei beweglich um die Schwenkachse um seinen Führungskörper bewegt werden kann. Durch dieses freie Schwenken erfährt der Faltspriegel mit seinem Lenker quasi einen zusätzlichen Freiheitsgrad, der es ihm ermöglicht, bei geöffnetem Faltverdeck in abgelegter Position des Verdeckstoffes in eine weit nach hinten, entgegen der Fahrtrichtung weisende Position geschwenkt zu werden. Somit wird der Verdeckstoff weit nach hinten gefaltet, wobei sich dieser über einen schwenkbaren Faltspriegel und einen verschiebbaren Zwischenspriegel in einer vorbestimmten Faltenlage ablegt. Durch diese erfindungsgemäße Ausgestaltung, bei der zusätzliche Steuerfunktionen eines Faltspriegels mit entsprechendem Lenker durch den Verdeckstoff selber erfolgen, kann auf zusätzliche Faltenleger verzichtet werden. Ebenso entfallen durch diese Ausführung Steuerlenker beziehungsweise Führungslenker, sowie aufwändige Kulissensteuerungen um den Lenker des Faltspriegels in die gewünschte Position zu bewegen. Auch wird es durch diese Schwenkbeweglichkeit der Faltspriegel und Lenker möglich, dass bei abgelegtem Faltverdeck die Zwischenspriegel und Faltspriegel mit ihren Führungskörpern, sowie die Dachkappe mit ihrer Lenkerkinematik in eine sehr kompakte, dicht voneinander beabstandete Position bewegt werden können. Die Dachkappe bildet hierbei vorzugsweise den oberen Abschluss des abgelegten Faltverdecks, wobei durch die räumliche Neigung der Dachkappe die Form des an der Dachkappe befestigten Verdeckstoffs vorgegeben wird. Die Form des abgelegten Verdeckstoffs ist durch die wechselnde Anordnung von Zwischenspriegeln und Faltspriegeln Z-förmig ausgeprägt, wobei der Verdeckstoff über entsprechend geeignete Halteelemente in Nuten der Faltspriegel und Zwischenspriegel befestigt ist.

Bei sich schließendem Faltverdeck bewegt sich die Dachkappe in Fahrtrichtung und spannt den an ihr befestigten Verdeckstoff, so dass die Faltspriegel über den Verdeckstoff in Fahrtrichtung geschwenkt werden. Hierbei gleitet der Gleitkörper eines jeden Lenkers eines Faltspriegels auf einer äußeren Aufnahmefläche der Führungsschiene so lange, bis dass der Gleitkörper über die Ausnehmung der Führungsschiene in die Führungsschiene hinein bewegt wird. Ab diesem Moment ist der Faltspriegel mit seinem Lenker wieder in der Führungsschiene zwangsgeführt und nimmt von seiner vertikalen Ausrichtung bereits seine Endlage ein. Natürlich ist es möglich, dass bei Erreichen der eigentlichen Endlage, bei geschlossenem Faltverdeck, die Gleitkörper eines jeden Lenkers eines Faltspriegels über die Führung in der Führungsschiene z. B. mittels einer Kulisse eine zusätzliche Bewegung erfahren können. Auch ist es denkbar, dass in dieser Position die Gleitkörper über geeignete Verriegelungselemente zur Führungsschiene hin fixiert und verriegelt werden können. Dies ist dann von Vorteil, wenn beispielsweise nur der vordere Teil des Faltverdecks geöffnet werden soll und der hintere Bereich des Faltverdecks in geschlossener beziehungsweise der den Verdeckstoff spannenden Position gehalten wird. So ist es beispielsweise möglich, trotz rückseitigem, gespanntem und geschlossenem Faltverdeck im vorderen Bereich des Faltverdeckes dieses ähnlich einem normalen Schiebedach, wenigstens teilweise geöffnet werden kann.

Eine weitere vorteilhafte Ausgestaltung ist darin zu sehen, dass die im seitlichen Öffnungsbereich der Dachöffnung angebrachten Führungsschienen der Dachführung im Wesentlichen mit einer nach oben weisenden Führungsnut als beinahe geschlossenes, vorzugsweise eckiges Profil ausgebildet sind, wobei über diese Führungsnut, außer allen nach außen ragenden Bauteilen, auch das Wassermanagement des Faltverdecks bewirkt werden kann. Auf diese Art kann eintretendes Wasser innerhalb des geschlossenen Profils der Führungsschiene an eine geeignete Stelle geleitet werden, an der zur Entleerung ein entsprechender Abfluss vorgesehen ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Seitenansicht auf das Faltverdeck mit Verdeckkinematik und Dachführung,
- Fig. 2: einen Ausschnitt von entgegen der Fahrtrichtung geneigte und in der Führungsschiene aufgenommene Lenker der Faltspriegel während des Öffnungsvorgangs des Faltverdecks,
- Fig. 3: die Faltverdeckkinematik mit entgegengesetzt zur Fahrtrichtung geschwenkten Lenkern und Faltspriegeln bei geöffnetem Faltverdeck.

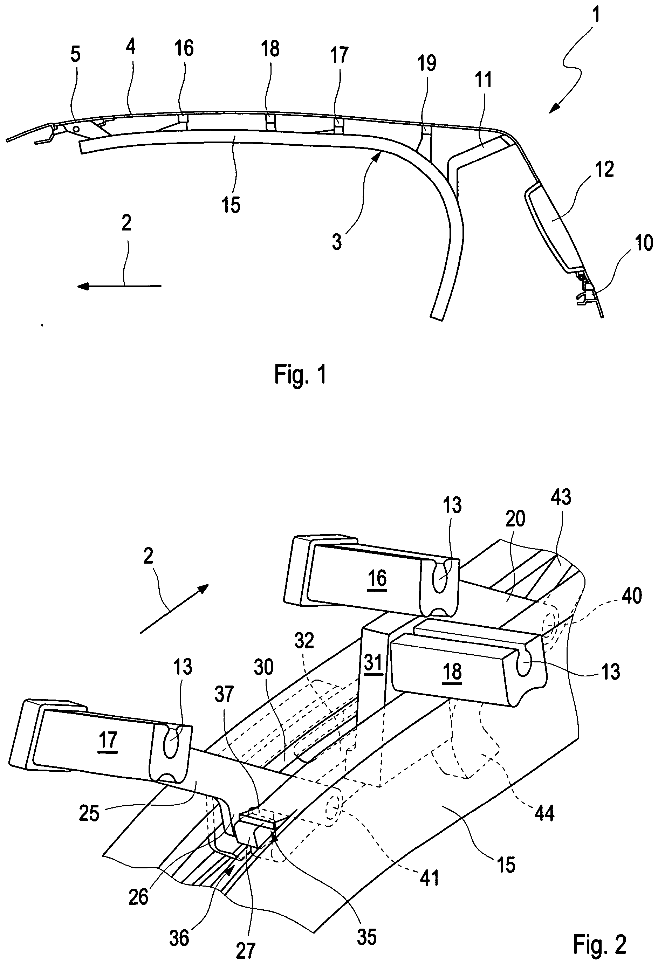

In Figur 1 ist eine Seitenansicht auf das Faltverdeck 1 mit Verdeckkinematik und Dachführung 3 bei geschlossenem Faltverdeck 1 abgebildet. Der Verdeckstoff 4 wird hierbei von der Dachkappe 5 ausgehend über einen Eckspriegel 11 in den Heckbereich des Fahrzeuges umgelenkt, wo er an einem Spannspriegel 10 angebracht ist. Der Spannspriegel 10 ist vorzugsweise verstellbar an der Fahrzeugkarosserie befestigt. Im Bereich des horizontalen Dachverlaufs des Faltverdecks 1 sind mehrere quer zur Fahrtrichtung 2 angeordnete Faltspriegel 16, 17 und Zwischenspriegel 18, 19 in wechselnder Folge zueinander, unterhalb des Verdeckstoffes 4 an diesem befestigt angeordnet. Diese Spriegel 16, 17, 18, 19 dienen dazu, dass bei geschlossenem Faltverdeck 1 der Verdeckstoff 4 in einer, der Dachkontur angepassten Form gehalten werden kann. Im Heckbereich des Fahrzeuges wird der Verdeckstoff 4 über einen Eckspriegel 11 aus seiner nahezu horizontalen Ausrichtung in einen schräg nach unten gerichteten Verlauf umgelenkt. Hierbei weist der Verdeckstoff 4 nahe dem Spannspriegel 10 eine Heckscheibe 12 auf, die sowohl aus einem transparenten Kunststoff, wie auch aus Glas gefertigt sein kann.

Entsprechend der Dachöffnung, sowie dem Bewegungsverlauf des zu bewegenden Faltverdecks 1 sind im seitlichen Öffnungsbereich der Dachöffnung, Führungsschienen 15 einer Dachführung 3 angebracht, die zur Aufnahme der Verriegelungskinematik der Dachkappe 5, sowie für Führungskörper beziehungsweise Führungsschlitten der Spriegel 16, 17, 18, 19 dienen. Diese Führungskörper beziehungsweise Führungsschlitten sind in der Führungsschiene 15 verschiebbar angeordnet, wobei diese über einen Antriebmechanismus, vorzugsweise einem Zugseil, Gewindekabel oder Bowdenzug bewegt werden können.

Der Faltspriegel 16, der nahe der Dachkappe 5 positioniert ist, ist vorzugsweise mit seinem Lenker 20 an der Verriegelungskinematik der Dachkappe 5 schwenkbar angebracht. In etwa mittiger Position des Faltverdeckes 1 ist an einem Führungskörper 32 der Zwischenspriegel 18 befestigt, wobei der Faltspriegel 17 über seinen Lenker 25 schwenkbar an dem Führungskörper 32 angelenkt ist. Nahe dem Umlenkbereich des Faltverdeckes 1, zwischen horizontaler und schräg nach unten gerichtetem Dachverlauf ist ein Zwischenspriegel 19 über einen Halter 45 und einen Führungskörper in der Dachführung 3 aufgenommen. Die Umlenkung des Verdeckstoffs 1 erfolgt über den Eckspriegel 11, welcher ebenfalls über einen Führungskörper in der Dachführung 3 verschiebbar aufgenommen ist. Selbstverständlich ist es auch möglich, dass der Eckspriegel 11 durch entsprechende Gestaltung und Längen seiner seitlichen Arme auch eine feste Schwenkachse im Bereich der Dachführung 3 aufweisen kann. Bei dieser Ausgestaltung wäre es möglich, dass bei sich öffnendem Faltverdeck 1, der schräg nach hinten unten gerichtete Verdeckbereich mit der Heckscheibe 12, über den Eckspriegel 11 angesteuert, in eine nahezu horizontale oder schräg nach unten gerichtete Position, ausgehend vom Spannspriegel 10 geschwenkt werden kann. Der im horizontalen Dachbereich angeordnete Verdeckstoff 4 würde, bei sich vollständig geöffnetem Faltverdeck 1, mit entsprechender Faltenlage, auf dieser zuvor im Heckbereich abgelegten Heckscheibe 12 aufliegen können.

Die Figur 2 zeigt einen Ausschnitt von entgegen der Fahrtrichtung 2 geneigte und in der Führungsschiene 15 aufgenommene Lenker 20, 25 der Faltspriegel 16, 17 während des Öffnungsvorganges des Faltverdecks 1. Hierbei ragen die Lenker 20, 25 aus der Führungsnut 30 der Führungsschiene 15 hervor und sind innerhalb der Führungsschiene 15 über Schwenkachsen 40, 41 schwenkbar an Führungskörpern beziehungsweise Führungsschlitten angebracht. Diese Führungskörper beziehungsweise Führungsschlitten werden beispielsweise durch Innenprofile der Führungsschiene 15 gehalten beziehungsweise geführt. Zwischen dem Faltspriegel 16 und dem Faltspriegel 17 ist ein Zwischenspriegel 18 angeordnet, welcher über einen Halter 31 durch die Führungsnut 30 in die Führungsschiene 15 hineinragt und innerhalb der Führungsschiene 15 über einen Führungskörper 32 gehalten, beziehungsweise während eines Bewegungsvorganges geführt wird. Alle Spriegel 16, 17, 18, 19 des Faltverdecks weisen eine im Wesentlichen nach oben geöffnete Nut 13 auf, in der Halteelemente zur Lagefixierung des Verdeckstoffs 1 aufgenommen werden können. Diese Befestigung des Verdeckstoffs 1 innerhalb der Nuten 13 ist wichtig, da bei sich bewegendem Faltverdeck 1 der Verdeckstoff 4 ausschließlich über diese Verbindungen in seine End- beziehungsweise Zwischenpositionen gebracht werden kann.

Die Faltspriegel 16, 17 sind über Lenker 20, 25 innerhalb der Führungsschiene 15 über Schwenkachsen 40, 41 schwenkbar gelagert, wobei ein Schwenken der Lenker 20, 25 und somit der Faltspriegel 16, 17 im Übergangsbereich aus der horizontalen in die vertikale Lage der Führungsschiene erfolgt. Hierzu sind an jedem Lenker 20, 25 entgegen der Fahrtrichtung weisend, im unteren Drittel nahe der Schwenkachsen 40, 41 beabstandet Hebel 21, 26 abstehend, die an ihren Enden Gleitkörper 22, 27 aufweisen. Diese Gleitkörper 22, 27 werden innerhalb der Führungsschiene 15 in einer entsprechenden Kulisse geführt. Im Eckbereich zwischen der horizontalen und vertikalen Ausrichtung der Führungsschiene 15 der Dachführung 3 ist im Bereich der Gleitkörper 22, 27 eine Ausnehmung 36 an der Oberseite der Führungsschiene 15 vorgesehen, durch die, die Gleitkörper in Form einer Ein- und Austrittsöffnung 35 aus der Führungsschiene 15 heraustreten können. Diese Ein- und Austrittsöffnung 35 ist zur einfacheren und leichteren Führung der Gleitkörper 22, 27 mit einer Fangkulisse 37 versehen, die durch eine leichte Rundung nach außen die Austrittsbewegung der Gleitkörper 22, 27 erleichtert.

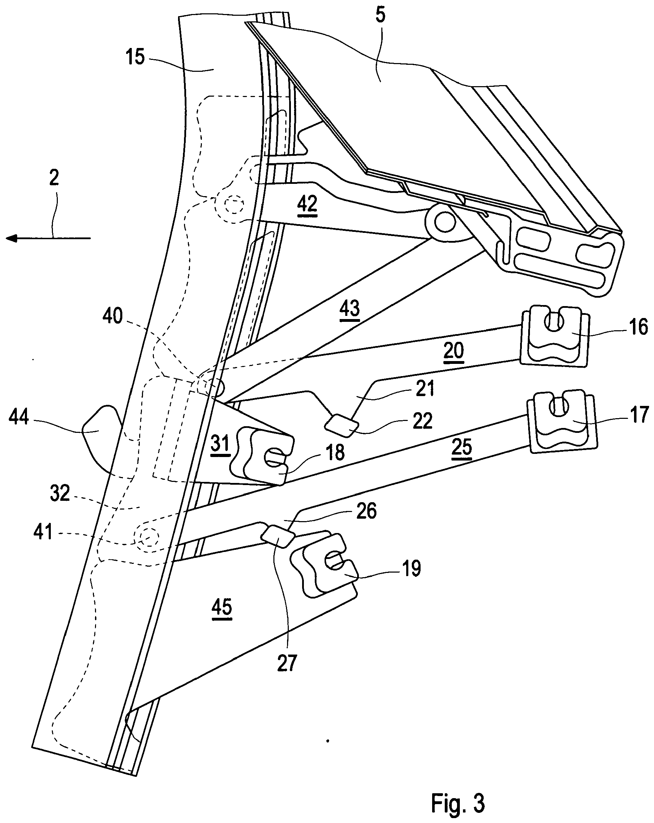

Die Faltkinematik mit entgegengesetzt zur Fahrtrichtung 2 geschwenkten Lenkern 20, 25 und Faltspriegeln 16, 17 sind bei geöffnetem Faltverdeck 1 in Figur 3 abgebildet. Hierbei sind die Gleitkörper 22, 27 aus der Führungsschiene 15 herausbewegt, so dass die Lenker 20, 25 der Faltspriegel 16, 17 über ihre Schwenkachsen 40, 41 in eine nahezu horizontale, entgegen der Fahrtrichtung 2 weisenden Position geschwenkt werden konnten. Unterhalb des Faltspriegels 17 und des Lenkers 25 ist ein Zwischenspriegel 19 über einen Halter 45 in der Endlage des geöffneten Faltverdecks mit der Führungsschiene 15 verriegelt, so dass alle weiteren Führungskörper des Zwischenspriegels 18 und der Faltspriegel 16, 17, sowie des Verriegelungsmechanismus der Dachkappe 5 mit dem Führungskörper des Zwischenspriegels 19 auf Block gefahren werden können. Diese Position beschreibt die Endlage bei geöffnetem Faltverdeck 1, wobei der Verdeckstoff 4, ausgehend vom Spannspriegel 10, über den Zwischenspriegel 19 auf den Faltspriegel 17, vom Faltspriegel 17 über den Zwischenspriegel 18 auf den Faltspriegel 16 geführt wird, um anschließend vom Faltspriegel 16 über die Dachkappe 5 an dieser befestigt zu werden. Durch die Verriegelung des Zwischenspriegels 19 mit der Führungsschiene 15 wird ein weiteres Absenken der Verstellkinematik des Faltverdecks 1 verhindert.

Die Dachkappe 5 wird hierbei über einen vorderen Lenker 42 und einen hinteren Lenker 43 mittels Führungskörpern ebenfalls in der Führungsschiene 15 bewegt, wobei der hintere Lenker 43 an seinem, der Dachkappe 5 entgegen gesetzten Ende einen Haken 44 zur Verriegelung der Dachkappe 5 zur Führungsschiene 15 aufweist. Wird das Faltverdeck 1 wieder geschlossen, werden der Verriegelungsmechanismus und die Führungskörper des vorderen Lenkers 42, sowie des hinteren Lenkers 43 in Fahrtrichtung 2 bewegt, wobei der Haken 44 aus seiner Verriegelung mit der Führungsschiene 15 heraus gefahren wird. Bei dieser Bewegung wird der Verdeckstoff 4 zuerst über die Dachkappe 5 zum Faltspriegel 16 gespannt, so dass der Faltspriegel 16 über seinem, mit dem Verriegelungsmechanismus schwenkbar verbundenen Lenker 20 bewegt wird und mit der Dachkappe 5 zusammen verschwenkt wird. Hierbei trifft der Gleitkörper 22 auf der Oberseite der Führungsschiene 15 auf und wird im Ausnehmungsbereich 36 der Ein- und Austrittsöffnung 35 über die Fangkulisse 37 in die Führungsschiene 15 hinein geführt. In gleicher Weise wird der Faltspriegel 17 mit seinem Lenker 25 und dem Gleitkörper 27 bewegt, so dass auch der Gleitkörper 27, entsprechend zuvor beschrieben, wieder in der Führungsschiene 15 aufgenommen wird. Über den Verdeckstoff 4 wird der Zwischenspriegel 18 in Fahrtrichtung bewegt, wobei selbstverständlich auch ein aktiver Antrieb über einen Seilzug oder ein Gewindekabel erfolgen kann. Nach dem die Dachkappe mit ihrem vorderen und hinteren Lenker 42, 43, der Faltspriegel 16 und der Faltspriegel 17, sowie der Zwischenspriegel 18, ihre wesentlichen Positionen (bei geschlossenem Faltverdeck 1) eingenommen haben, wird die Verriegelung zwischen den Zwischenspriegel 19 und der Führungsschiene 15 gelöst, so dass der Zwischenspriegel 19 ebenfalls in seine, dem geschlossenen Faltverdeck 1 zugeordnete Endposition bewegt werden kann.

### Bezugszeichenliste

- 1: Faltverdeck
- 2: Fahrtrichtung
- 3: Dachführung
- 4: Verdeckstoff
- 5: Dachkappe

- 10: Spannspriegel
- 11: Eckspriegel
- 12: Heckscheibe
- 13: Nut

- 15: Führungsschiene
- 16: Faltspriegel
- 17: Faltspriegel
- 18: Zwischenspriegel
- 19: Zwischenspriegel
- 20: Lenker
- 21: Hebel , Auskragung
- 22: Gleitkörper

- 25: Lenker
- 26: Hebel , Auskragung
- 27: Gleitkörper

- 30: Führungsnut
- 31: Halter
- 32: Führungskörper
- 35: Ein- und Austrittsöffnung
- 36: Ausnehmung
- 37: Fangkulisse

- 40: Schwenkachse
- 41: Schwenkachse
- 42: vorderer Lenker
- 43: hinterer Lenker
- 44: Haken
- 45: Halter

## Patentansprüche

1. Faltverdeck für ein Fahrzeug,
- mit einem Verdeckstoff (4), der in Fahrtrichtung (2) vorne in eine Dachkappe (5) übergeht und hinten über einen Spannspriegel (10) an der Fahrzeugkarosserie befestigt ist,
- wobei verschiebbare und schwenkbare Faltspriegel (16, 17) und verschiebbare Zwischenspriegel (18, 19) vorgesehen sind,
- wobei das Faltverdeck (1) zwischen einer geschlossenen Stellung in eine offene Stellung bewegt werden kann und in der offenen Stellung der Verdeckstoff (4) im Heckbereich des Fahrzeugs gefaltet ablegbar ist,
- wobei die Faltspriegel (16, 17) mittels Lenker (20, 25) über die Schwenkachsen (40, 41) schwenkbar an Führungskörpern oder Führungsschlitten in einer Führungsschiene (15) aufgenommen und geführt werden,
- wobei die Lenker (20, 25) der Faltspriegel (16, 17) über Gleitkörper (22, 27) in der Führungsschiene (15) zwangsgeführt werden, **dadurch gekennzeichnet,**
- **dass** die Faltspriegel (16, 17) und die Zwischenspriegel (18, 19) an ihrer, dem Verdeckstoff (4) zugewandten Seite, je eine Nut (13) zur Anbindung des Verdeckstoffs (4) aufweisen, und
- **dass** die Gleitkörper (22, 27) im Übergangsbereich der horizontalen zur vertikalen Erstreckung der Führungsschiene (15) der Dachführung (3) über eine Ausnehmung (36) einer Ein- und Austrittsöffnung (35) aus der Führungsschiene (15) herausbewegt werden.

2. Faltverdeck (1) nach Anspruch 1,
**dadurch gekennzeichnet,**
**dass** der Schwenkbereich der Faltspriegel (16, 17) bei aus der Führungsschiene (15) herausbewegten Gleitkörpern (22, 27) größer 90 Winkelgraden ist.

3. Faltverdeck (1) nach Anspruch 1 oder 2,
**dadurch gekennzeichnet,**
**dass** die Gleitkörper (22, 27) über Hebel (21, 26) an den Lenkern (20, 25) angebracht sind.

4. Faltverdeck (1) nach einem der Ansprüche 1 bis 3,
**dadurch gekennzeichnet,**
**dass** die Gleitkörper (22, 27) als Gleitsteine, Zylinderstifte oder Rollen ausgeführt sind.

5. Faltverdeck (1) nach Anspruch 4,
**dadurch gekennzeichnet,**
**dass** die Gleitkörper (22, 27) aus Messing, Bronze, aus einem Sintermetall oder aus einem Kunststoff gefertigt sein können.

6. Faltverdeck (1) nachAnspruch 1 oder 2,
**dadurch gekennzeichnet,**
**dass** die Ein- und Austrittsöffnung (35) an der Oberseite der Führungsschiene (15) eine Fangkulisse (37) aufweist und die Fangkulisse (37) von der Führungsschiene (15) nach oben weisend absteht.

7. Faltverdeck (1) nach einem der Ansprüche 1 bis 6,
**dadurch gekennzeichnet,**
**dass** die Lenker (20, 25) der Faltspriegel (16, 17) bei geöffnetem und im Heckbereich des Fahrzeugs abgelegten Faltverdeck (1) im Wesentlichen waagrecht ausgerichtet sind.

8. Faltverdeck (1) nach einem oder mehreren der vorangehenden Ansprüche,
**dadurch gekennzeichnet,**
**dass** der bei geöffnetem Faltverdeck (1) im Heckbereich des Fahrzeugs abgelegte Verdeckstoff (4) wenigstens eine Z-Faltung aufweist.

9. Faltverdeck (1) nach einem oder mehreren der vorangehenden Ansprüche,
**dadurch gekennzeichnet,**
**dass** der bei geöffnetem Faltverdeck (1) der im Heckbereich des Fahrzeugs abgelegte Verdeckstoff (4) in dieser Lage einerseits durch eine Verriegelung der Dachkappe (5) zur Führungsschiene (15) und einer Verriegelung des Zwischenspriegels (19) mit Halter (45) zur Führungsschiene (15) gehalten wird.

## Claims

1. Foldable vehicle roof,
- with a roof material (4) which merges at the front in the direction of travel (2) into a roof cap (5) and is fastened at the rear to the vehicle body via a tensioning bow (10),
- wherein displaceable and pivotable foldable bows (16, 17) and displaceable intermediate bows (18, 19) are provided,
- wherein the foldable roof (1) can be moved between a closed position into an open position and, in the open position, the roof material (4) is storable in a folded manner in the rear region of the vehicle,
- wherein the foldable bows (16, 17) are accommodated and guided by means of links (20, 25) in a guide rail (15) on guide bodies or guide slides so as to be pivotable via the pivot axes (40, 41),
- wherein the links (20, 25) of the foldable bows (16, 17) are forcibly guided in the guide rail (15) via sliding bodies (22, 27), **characterized**
- **in that** the foldable bows (16, 17) and the intermediate bows (18, 19) each have a groove (13), on their side facing the roof material (4), for the connection of the roof material (4), and
- **in that**, in the transition region from the horizontal to the vertical extent of the guide rail (15) of the roof guide (3), the sliding bodies (22, 27) are moved out of the guide rail (15) via a recess (36) in an inlet and outlet opening (35).

2. Foldable roof (1) according to Claim 1, **characterized in that**, when the sliding bodies (22, 27) are moved out of the guide rail (15), the pivoting range of the foldable bows (16, 17) is greater than 90 degrees of angle.

3. Foldable roof (1) according to Claim 1 or 2, **characterized in that** the sliding bodies (22, 27) are attached to the links (20, 25) via levers (21, 26).

4. Foldable roof (1) according to one of Claims 1 to 3, **characterized in that** the sliding bodies (22, 27) are designed as sliding blocks, cylindrical pins or rollers.

5. Foldable roof (1) according to Claim 4, **characterized in that** the sliding bodies (22, 27) can be manufactured from brass, bronze, from a sintered metal or from a plastic.

6. Foldable roof (1) according to Claim 1 or 2, **characterized in that** the inlet and outlet opening (35) on the upper side of the guide rail (15) has a catch slot (37), and the catch slot (37) protrudes from the guide rail (15) in a manner pointing upwards.

7. Foldable roof (1) according to one of Claims 1 to 6, **characterized in that**, when the foldable roof (1) is open and stored in the rear region of the vehicle, the links (20, 25) of the foldable bows (16, 17) are oriented substantially horizontally.

8. Foldable roof (1) according to one or more of the preceding claims, **characterized in that** the roof material (4) which is stored in the rear region of the vehicle when the foldable roof (1) is open has at least one Z fold.

9. Foldable roof (1) according to one or more of the preceding claims, **characterized in that** the roof material (4) which is stored in the rear region of the vehicle when the foldable roof (1) is open takes place in this position firstly by locking of the roof cap (5) with respect to the guide rail (15) and locking of the intermediate bow (19) with respect to the guide rail (15) with a holder (45).

## Revendications

1. Toit décapotable de véhicule, comprenant :
- une toile de capote (4) qui se prolonge dans la direction de conduite (2) vers l'avant par une calotte de toit (5) et qui est fixée à l'arrière par le biais d'un arceau de tensionnement (10) à la carrosserie du véhicule,
- des arceaux repliables déplaçables et pivotants (16, 17) et des arceaux intermédiaires déplaçables (18, 19) étant prévus,
- le toit décapotable (1) pouvant être déplacé entre une position fermée et une position ouverte et, dans la position ouverte, la toile de capote (4) pouvant être déposée à l'état replié dans la région arrière du véhicule,
- les arceaux repliables (16, 17) étant reçus et guidés sur des corps de guidage ou des chariots de guidage dans un rail de guidage (15) au moyen de bras oscillants (20, 25) de manière à pouvoir pivoter par le biais des axes de pivotement (40, 41),
- les bras oscillants (20, 25) des arceaux repliables (16, 17) étant guidés par force par le biais de corps de glissement (22, 27) dans le rail de guidage (15),
**caractérisé en ce que**
- les arceaux repliables (16, 17) et les arceaux intermédiaires (18, 19) présentent, au niveau de leur côté tourné vers la toile de capote (4), une rainure respective (13) pour le rattachement de la toile de capote (4), et
- les corps de glissement (22, 27) sont déplacés hors du rail de guidage (15) dans la région de transition entre l'étendue horizontale et l'étendue verticale du rail de guidage (15) du guide de de toit (3) par le biais d'un évidement (36) d'une ouverture d'entrée et de sortie (35).

2. Toit décapotable (1) selon la revendication 1, **caractérisé en ce que** la plage de pivotement des arceaux repliables (16, 17) lorsque les corps de glissement (22, 27) sont ressortis du rail de guidage (15) est supérieure à 90 degrés angulaires.

3. Toit décapotable (1) selon la revendication 1 ou 2, **caractérisé en ce que** les corps de glissement (22, 27) sont montés par le biais de leviers (21, 26) sur les bras oscillants (20, 25).

4. Toit décapotable (1) selon l'une quelconque des revendications 1 à 3, **caractérisé en ce que** les corps de glissement (22, 27) sont réalisés sous forme de coulisseaux, de goupilles cylindriques ou de rouleaux.

5. Toit décapotable (1) selon la revendication 4, **caractérisé en ce que** les corps de glissement (22, 27) peuvent être fabriqués en laiton, en bronze, en un métal fritté ou en un plastique.

6. Toit décapotable (1) selon la revendication 1 ou 2, **caractérisé en ce que** l'ouverture d'entrée et de sortie (35) sur le côté supérieur du rail de guidage (15) présente une coulisse de réception (37) et la coulisse de réception (37) fait saillie de manière orientée vers le haut depuis le rail de guidage (15).

7. Toit décapotable (1) selon l'une quelconque des revendications 1 à 6, **caractérisé en ce que** les bras oscillants (20, 25) des arceaux repliables (16, 17) sont orientés essentiellement horizontalement lorsque le toit décapotable (1) est ouvert et est rangé dans la région arrière du véhicule.

8. Toit décapotable (1) selon l'une quelconque ou plusieurs des revendications précédentes, **caractérisé en ce que** la toile de capote (4) rangée dans la région arrière du véhicule lorsque le toit décapotable (1) est ouvert présente au moins un pliage en Z.

9. Toit décapotable (1) selon l'une quelconque ou plusieurs des revendications précédentes, **caractérisé en ce que** la toile de capote (4) rangée dans la région arrière du véhicule lorsque le toit décapotable (1) est ouvert se passe dans cette position d'une part par un verrouillage de la calotte de toit (5) par rapport au rail de guidage (15) et par un verrouillage de l'arceau intermédiaire (19) avec un élément de fixation (45) par rapport au rail de guidage (15).
